# EUROPEAN PATENT SPECIFICATION

(11) **EP 3 036 414 B1**
(45) Date of publication and mention of the grant of the patent: **28.11.2018**
(21) Application number: 14837319.4
(22) Date of filing: 15.08.2014
(51) Int. Cl.: F02B 37/12, F02B 37/22, F02B 37/24, F02B 39/00, F01D 17/00, F02C 6/12

(54) **EXHAUST-GAS TURBOCHARGER**
ABGASTURBOLADER
TURBOCOMPRESSEUR À GAZ D'ÉCHAPPEMENT

(30) Priority: 19.08.2013 DE 102013216332
(43) Date of publication of application: 29.06.2016
(73) Proprietor: Borgwarner Inc., Auburn Hills, MI 48326 (US)
(72) Inventor: RAMB, Thomas, 67551 Worms (DE)
(74) Representative: Peterreins Schley
(86) International application number: PCT/US2014/051263
(87) International publication number: WO 2015/026654

(56) References cited:
- WO-A1-2013/047154
- DE-A1-102007 005 445
- JP-A- H09 296 731
- JP-A- 2003 254 075
- KR-A- 20060 069 655
- KR-A- 20110 108 206
- US-A1- 2006 112 690

## Description

The invention relates to an exhaust-gas turbocharger and to a VTG cartridge.

In the case of such an exhaust-gas turbocharger, provision is made of a variable turbine geometry (VTG), in which guide vanes are adjusted by means of an adjusting ring. An actuation pin is in this context guided in a groove of an adjusting lever.

WO 2013/047154 A1 discloses a turbocharger with a variable nozzle mechanism section that regulates the flow of exhaust gas to a turbine rotor, a link mechanism that converts reciprocal displacement from an actuator that operates the variable nozzle mechanism into rotational displacement and transmits said rotational displacement to the inner section of a bearing housing, and an engaging section that causes the output section of the link mechanism and the input section of the variable nozzle mechanism to engage. The engaging section is configured in form of a pin and an insertion slot into which the pin is inserted. A smooth surface is formed around the insertion position of the pin and is capable of guiding the tip of the pin into the insertion position.

DE 10 2007 005445 A1 discloses a turbocharger having a flow-control device adjustable by an adjusting element over a transmission, wherein the transmission has a lever arm rotatable by the adjusting element. The arm has a bolt at the far side of the adjusting element, the bolt being guided in a connecting unit. The bolt is subjected with larger compressive force from a first guiding side of the connecting unit than from a second guiding side of the connecting unit.

It is an object of the present invention to provide an exhaust-gas turbocharger and a VTG cartridge in the case of which the wear at the contact between the adjusting lever and the actuation pin is as small as possible.

This object is achieved by the features of claims 1 and 7.

The dependent claims contain advantageous developments of the invention.

Within the context of the invention, it has been identified that the wear between the actuation pin and the adjusting lever can be reduced if the actuation pin has a polygonal rather than a round cross section. Owing to the polygonal cross section, the actuation pin can have rounded side faces with a very large radius. This radius of the side faces is considerably greater than the radius of a conventional pin having a round cross section. The enlarged radius reduces the point loading between the actuation pin and the adjusting lever, and therefore the wear is reduced.

Within the context of this invention, a polygonal cross-sectional shape is not necessarily understood to mean a polygon having sharp edges. Within the context of the invention, it is by all means also possible that the corners on the actuation pin are rounded. Furthermore, provision is preferably made that the side faces of the actuation pin too do not have a planar profile, but rather are curved outward and therefore have a rounding.

The adjusting lever has a groove, in which the actuation pin is seated. A width is defined on this groove. As has already been described, the side faces of the polygonal cross section are rounded with a first radius. The first radius preferably measures at least 1.5 times the width of the groove. This ensures that the polygonal cross-sectional shape bears with the greatest possible first radius against the adjusting lever, and therefore little wear or little material removal takes place.

In particular, the shape of what is termed an "orbiform curve" is chosen for the cross section. This can ensure that the play between the actuation pin and the adjusting lever remains as small as possible.

Particularly for use with utility vehicles, it is provided that the actuation pin comprises a sliding block, the polygonal cross section being formed on the sliding block.

Further details, features and advantages of the invention become apparent from the following description of exemplary embodiments with reference to the drawing, in which:
Figure 1 shows a schematically greatly simplified illustration of an exhaust-gas turbocharger according to the invention according to one embodiment,
Figure 2 shows a perspective plan view of an embodiment of a VTG cartridge according to the invention,
Figure 3 shows an enlarged partial view of the VTG cartridge according to Figure 2,
Figure 4 shows a lateral partial illustration of the VTG cartridge according to Figure 2,
Figure 5 shows a plan view of the actuation pin shown in Figure 2, and
Figure 6 shows a comparison between a conventional actuation pin and an actuation pin according to the invention.

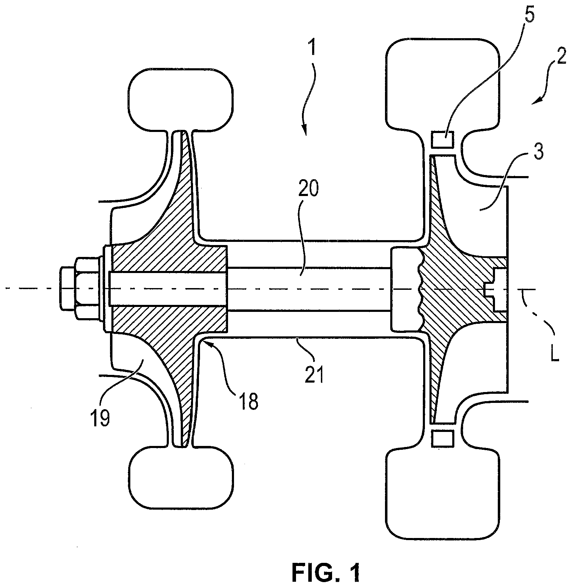

Figure 1 shows a schematically greatly simplified basic illustration of an exhaust-gas turbocharger 1 according to the invention, which has a charger axis of rotation L.

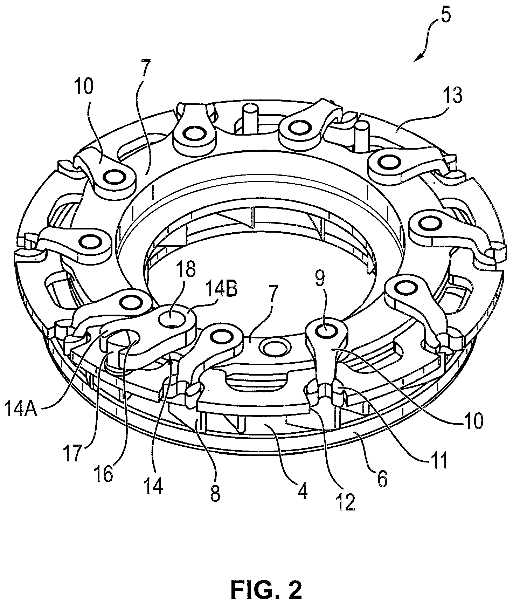

The exhaust-gas turbocharger 1 also has a turbine 2, which comprises a turbine wheel 3 surrounded by an inflow duct 4 which is provided with a so-called VTG cartridge 5. This VTG cartridge 5 will be described in detail hereinbelow with reference to Figures 2 to 6.

The exhaust-gas turbocharger 1 also of course has all the other common parts of an exhaust-gas turbocharger, such as a rotor 20, which is mounted rotatably in a bearing housing 21 and which bears the turbine wheel 3 at one end and a compressor wheel 19 of a compressor 18 at the other end. These parts are likewise shown only in schematically greatly simplified form in Figure 1, since they are not of importance for explaining the principles of the present invention.

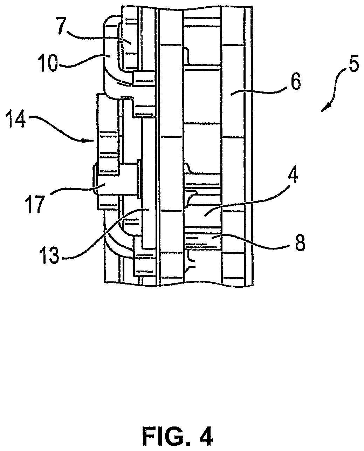

A VTG cartridge 5 is understood to mean a structural unit which, between a vane bearing ring 7 and a disk 6, delimits an inflow duct 4 for the passage of exhaust gases to the turbine wheel 3. Furthermore, a VTG cartridge 5 of this type has a plurality of vanes 8, which are arranged in the inflow duct 4 and of which Figures 2 and 4 show one vane designated 8 as a representative example of all vanes 8 bearing the corresponding reference numeral. The vanes 8 can be moved rotatably in the vane bearing ring 7 between a closed and an open position. For this purpose, the vanes 8 have vane shafts 9 each having an axis of rotation. The vane shafts 9 in turn are connected to vane levers 10, of which two vane levers 10 are denoted in each case in Figure 2 with the reference numeral 10. As Figure 2 shows, the embodiment shown there has ten such, preferably cranked vane levers 10, in each case of identical design, and correspondingly ten vanes 8.

Each vane lever 10 has a lever head 11, which engages into an associated adjusting ring groove 12 in an adjusting ring 13. Figure 2 shows in this respect that the adjusting ring 13 surrounds the vane bearing ring 7 on the outside, i.e. along the outer circumference thereof.

For radially mounting the adjusting ring 13, provision is made of a radial bearing, which is preferably formed by the vane levers 10. For this purpose, the vane levers 10 are formed as rolling levers, the lever heads 11 of which are supported in the adjusting ring grooves 12 in the adjusting ring 13. Figures 2 and 4 show that the adjusting ring grooves 12 are arranged in a plane that is offset with respect to the bearing plane of the vane levers 10 on the vane bearing ring 7, which is the reason for the cranked configuration of the vane levers 10 in this embodiment.

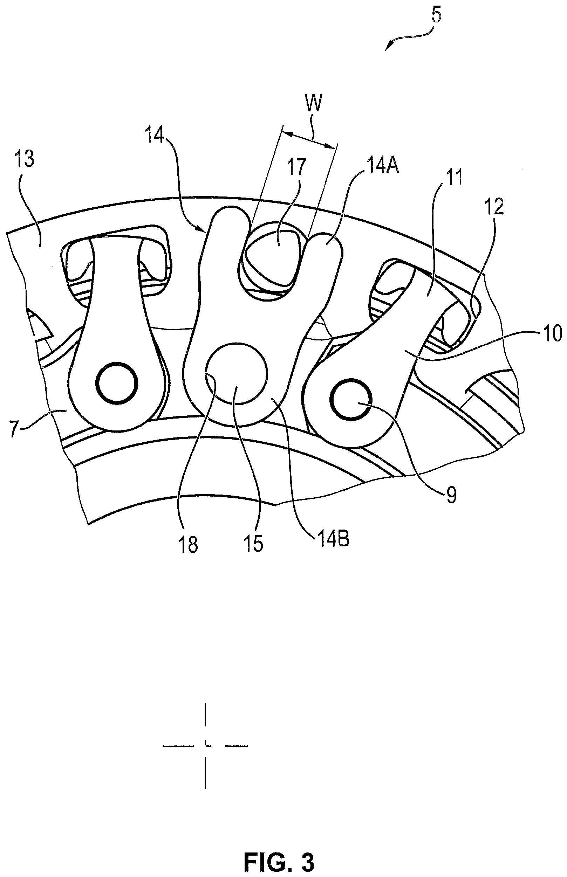

As can be seen when Figures 2 to 4 are viewed in combination, the exhaust-gas turbocharger 1 according to the invention, or the VTG cartridge 5 according to the invention, also has an adjusting lever 14, which is operatively connected to an adjusting shaft 15 (which can be seen in Figure 3) for transmitting an adjusting torque to the adjusting ring 13. The adjusting shaft 15 can be actuated by means of a suitable actuator which is known per se and is not shown in detail in Figures 2 to 4, since it is not necessary for the purposes of explaining the principles of the present invention.

The adjusting lever 14 has a first end region 14A, which in the assembled state is adjacent to the adjusting ring 13 and which has a groove 16 that engages around an actuation pin 17. The actuation pin 17 is fixed on the adjusting ring 13, preferably is welded onto the adjusting ring 13.

As can also be seen from Figures 2 to 4, the groove 16 is open on one side, which results in a fork-like structure of the first end region 14A, as can be seen in particular from the illustration presented in Figure 3. The groove 16 on the adjusting lever 14 has a width W.

The adjusting lever 14 also has a second end region 14B, which is arranged adjacent to the vane bearing ring 7, in particular above the vane bearing ring 7, and is provided with a recess 18 in which the adjusting shaft 15 is fixed. In Figure 2, only the recess 18 can be seen, whereas Figure 3 shows a schematically simplified representation of the arrangement of the adjusting shaft 15 in the recess 18. The adjusting shaft 15 may for example be welded in the recess 18.

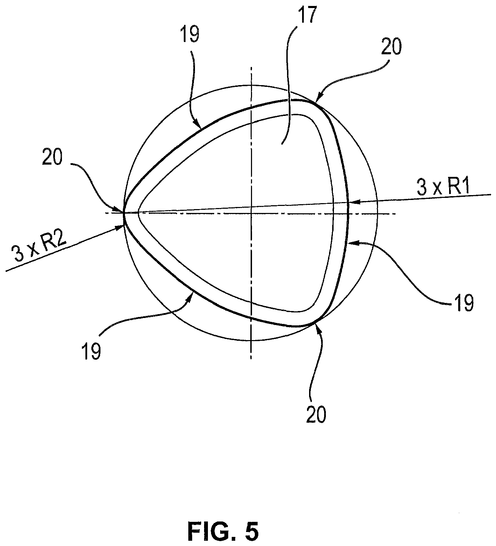

In particular, Figures 3 and 5 show the exact configuration of the actuation pin 17 with its polygonal cross-sectional shape. The polygonal cross-sectional shape is defined by three side faces 19 and accordingly three edges 20. Both the side faces 19 and the edges 20 are rounded. At the side faces 19, the actuation pin 17 has a first radius R1. At the edges 20, the actuation pin 17 has a second radius R2. As is shown in Figure 5, the cross section of the actuation pin 17 is in the form of an orbiform curve.

Figure 3, in contrast to the illustration in Figure 2, shows the adjusting ring grooves 12 as closed pockets. This configurational detail has no effect on the invention, however.

As is shown for example in Figure 3, the adjusting lever 14 bears against a side face 19 of the polygonal cross-sectional shape of the actuation pin 17. With the first radius R1, the side faces 19 have a much greater radius than for example a conventional round cross-sectional shape.

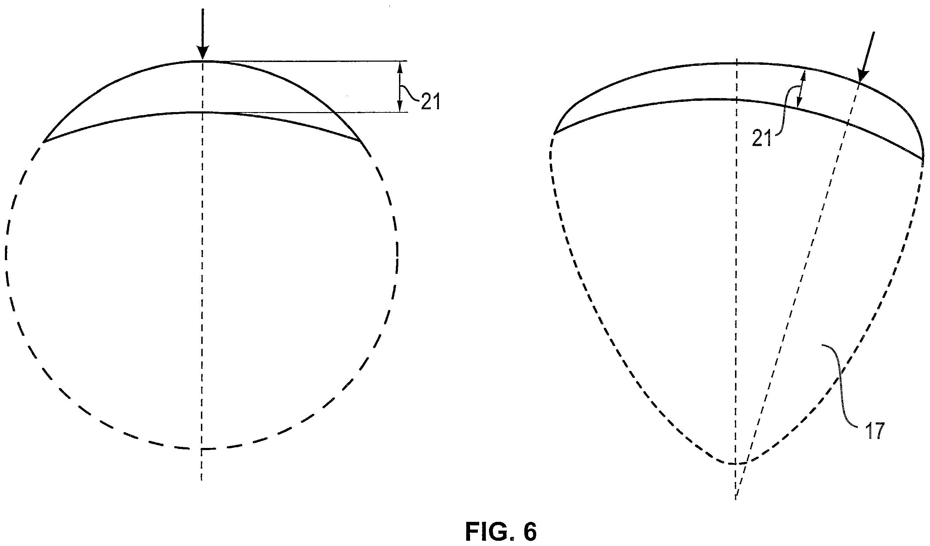

Figure 6 shows in detail a comparison between a conventional round cross-sectional shape and the polygonal cross-sectional shape according to the invention. A material removal or wear 21 is indicated in Figure 6 in both illustrations. Since a large first radius R1, greater than the circular radius of the conventional variant, is chosen for the polygonal cross-sectional shape, the material removal 21 can be reduced.

In addition to the above written disclosure, reference is hereby explicitly made to the illustrative representation of the invention in Figures 1 to 6 to supplement the disclosure of the invention.

### LIST OF REFERENCE SIGNS

- 1: Exhaust-gas turbocharger
- 2: Turbine
- 3: Turbine wheel
- 4: Inflow duct
- 5: VTG cartridge
- 6: Disk
- 7: Vane bearing ring
- 8: Vanes
- 9: Vane shafts
- 10: Vane levers
- 11: Lever heads
- 12: Adjusting ring grooves
- 13: Adjusting ring
- 14: Adjusting lever
- 14A, 14B: End regions of the adjusting ring
- 15: Adjusting shaft
- 16: Groove
- 17: Actuation pin
- 18: Recess
- 19: Side faces
- 20: Edges
- 21: Material removal
- L: Charger longitudinal axis
- R1: First radius
- R2: Second radius
- W: Width

## Claims

1. A variable turbine geometry (VTG) cartridge (5) of an exhaust-gas turbocharger (1),
- having a disk (6) and a vane bearing ring (7), which delimit an inflow duct (4),
- having a plurality of vanes (8) which are arranged in the inflow duct (4) and which are mounted in the vane bearing ring (7) by way of rotatable vane shafts (9) which are connected to vane levers (10), the vane levers (10) connecting the respective vane (8) to an adjusting ring (13), which is arranged concentrically with respect to the vane bearing ring (7), and
- having an adjusting lever (14), which is arranged for transmitting an adjusting torque to the adjusting ring (13), the adjusting lever (14) having a groove (16) which engages around an actuation pin (17),
wherein
- the actuation pin (17) has a polygonal cross section at the height of the adjusting lever (14); and
**characterized in that** the groove (16) in the adjusting lever (14) has a width (W), in which the polygonal cross section of the actuation pin (17) is guided, the side faces (19) of the polygonal cross section being rounded with a first radius (R1), and the first radius (R1) measuring at least 1.5 times, preferably at least 1.8 times, the width (W).

2. The VTG cartridge as claimed in claim 1, wherein the polygonal cross section has rounded side faces (19).

3. The VTG cartridge as claimed in one of the preceding claims, wherein the polygonal cross section is in the form of a Reuleaux triangle.

4. The VTG cartridge as claimed in one of the preceding claims, wherein the groove (16) in the adjusting lever (14) has a width (W), in which the polygonal cross section of the actuation pin (17) is guided, the edges (20) of the polygonal cross section being rounded with a second radius (R2), and the second radius (R2) measuring at most 0.7 times, preferably at most 0.5 times, the width (W).

5. The VTG cartridge as claimed in one of the preceding claims, wherein the adjusting lever (14) is mounted adjacent to the vane bearing ring (7) on an adjusting shaft (15) via a recess (18) of the adjusting lever (14), the actuation pin (17) being mounted on the adjusting ring (13).

6. The VTG cartridge as claimed in one of the preceding claims, wherein the actuation pin (17) comprises a sliding block, the polygonal cross section being formed on the sliding block.

7. An exhaust-gas turbocharger (1)
- having a turbine (2)
• which has a turbine wheel (3) surrounded by an inflow duct (4), and
- having a VTG cartridge (5) according to any one of claims 1 to 6.

## Patentansprüche

1. Variable-Turbinengeometrie-Einsatz (VTG-Einsatz) (5) eines Abgasturboladers (1),
- mit einer Scheibe (6) und einem Schaufellagerring (7), die einen Zustromkanal (4) begrenzen,
- mit einer Vielzahl von Schaufeln (8), die in dem Zustromkanal (4) angeordnet sind und die in dem Schaufellagerring (7) durch drehbare Schaufelwellen (9) montiert sind, die mit Schaufelhebeln (10) verbunden sind, wobei die Schaufelhebel (10) die entsprechende Schaufel (8) mit einem Einstellring (13) verbinden, der in Bezug auf den Schaufellagerring (7) konzentrisch angeordnet ist, und
- mit einem Einstellhebel (14), der angeordnet ist, um ein Einstelldrehmoment auf den Einstellring (13) zu übertragen, wobei der Einstellhebel (14) eine Nut (16) aufweist, die rings um einen Betätigungsstift (17) eingreift,
wobei
- der Betätigungsstift (17) einen vieleckigen Querschnitt an der Höhe des Einstellhebels (14) aufweist; und
**dadurch gekennzeichnet,**
**dass** die Nut (16) in dem Einstellhebel (14) eine Breite (Width, W) aufweist, in welcher der vieleckige Querschnitt des Betätigungsstifts (17) geführt wird, wobei die Seitenflächen (19) des vieleckigen Querschnitts mit einem ersten Radius (R1) abgerundet sind und der erste Radius (R1) mindestens das 1,5-Fache, vorzugsweise mindestens das 1,8-Fache, der Breite (W) misst.

2. VTG-Einsatz nach Anspruch 1, wobei der vieleckige Querschnitt abgerundete Seitenflächen (19) aufweist.

3. VTG-Einsatz nach einem der vorangehenden Ansprüche, wobei der vieleckige Querschnitt die Form eines Reuleaux-Dreiecks hat.

4. VTG-Einsatz nach einem der vorangehenden Ansprüche, wobei die Nut (16) in dem Einstellhebel (14) eine Breite (W) hat, in welcher der vieleckige Querschnitt des Betätigungsstifts (17) geführt wird, wobei die Kanten (20) des vieleckigen Querschnitts mit einem zweiten Radius (R2) abgerundet sind und der zweite Radius (R2) höchstens das 0,7-Fache, vorzugsweise höchstens das 0,5-Fache, der Breite (W) misst.

5. VTG-Einsatz nach einem der vorangehenden Ansprüche, wobei der Einstellhebel (14) angrenzend an den Schaufellagerring (7) auf einer Einstellwelle (15) über eine Vertiefung (18) des Einstellhebels (14) montiert ist, wobei der Betätigungsstift (17) auf dem Einstellring (13) montiert ist.

6. VTG-Einsatz nach einem der vorangehenden Ansprüche, wobei der Betätigungsstift (17) einen Kulissenstein umfasst, wobei der mehreckige Querschnitt auf dem Kulissenstein ausgebildet ist.

7. Abgasturbolader (1)
- mit einer Turbine (2)
- die ein Turbinenrad (3) aufweist, das von einem Zustromkanal (4) umgeben ist,
und
- mit einem VTG-Einsatz (5) nach einem der Ansprüche 1 bis 6.

## Revendications

1. Cartouche à géométrie variable de turbine (VTG) (5) d'un turbocompresseur à gaz d'échappement (1),
ayant un disque (6) et une bague de roulement d'aube (7), qui délimitent une conduite d'admission (4),
ayant plusieurs aubes (8) qui sont disposées dans la conduite d'admission (4) et qui sont montées dans la bague de roulement d'aube (7) au moyen d'arbres d'aube (9) rotatifs qui sont reliés à des leviers d'aubes (10), les leviers d'aubes (10) reliant l'aube (8) respective à une bague de réglage (13), qui est disposée concentriquement par rapport à la bague de roulement d'aube (7), et
ayant un levier de réglage (14), qui est conçu pour transmettre un couple de réglage à la bague de réglage (13), le levier de réglage (14) ayant une rainure (16) qui vient en prise autour d'une tige d'actionnement (17),
la tige d'actionnement (17) ayant une section transversale polygonale à la hauteur du levier de réglage (14) ; et
**caractérisée en ce que**
la rainure (16) dans le levier de réglage (14) a une largeur (W), dans laquelle la section transversale polygonale de la tige d'actionnement (17) est guidée, les faces latérales (19) de la section transversale polygonale étant arrondies avec un premier rayon (R1), et le premier rayon (R1) mesurant au moins 1,5 fois, de préférence au moins 1,8 fois, la largeur (W).

2. Cartouche VTG selon la revendication 1, la section transversale polygonale ayant des faces latérales arrondies (19).

3. Cartouche VTG selon l'une des revendications précédentes, la section transversale polygonale étant sous la forme d'un triangle de Reuleaux.

4. Cartouche VTG selon l'une des revendications précédentes, la rainure (16) dans le levier de réglage (14) ayant une largeur (W), dans laquelle la section transversale polygonale de la tige d'actionnement (17) est guidée, les bords (20) de la section transversale polygonale étant arrondis avec un second rayon (R2), et le second rayon (R2) mesurant au maximum 0,7 fois, de préférence au maximum 0,5 fois, la largeur (W).

5. Cartouche VTG selon l'une des revendications précédentes, le levier de réglage (14) étant monté adjacent à la bague de roulement d'aube (7) sur un arbre de réglage (15) par l'intermédiaire d'un évidement (18) du levier de réglage (14), la tige d'actionnement (17) étant montée sur la bague de réglage (13).

6. Cartouche VTG selon l'une des revendications précédentes, la tige d'actionnement (17) comprenant un bloc coulissant, la section transversale polygonale étant formée sur le bloc coulissant.

7. Turbocompresseur à gaz d'échappement (1)
ayant une turbine (2)
qui a une roue de turbine (3) entourée d'une conduite d'admission (4), et ayant une cartouche VTG (5) selon l'une quelconque des revendications 1 à 6.
